# EUROPÄISCHE PATENTSCHRIFT

(11) **EP 3 192 412 B1**
(45) Veröffentlichungstag und Bekanntmachung des Hinweises auf die Patenterteilung: **30.10.2019**
(21) Anmeldenummer: 16204920.9
(22) Anmeldetag: 19.12.2016
(51) Int. Cl.: A47J 31/60

(54) **GETRÄNKEAUTOMAT MIT AUTOMATISCHER REINIGUNGSVORRICHTUNG**
BEVERAGE DISPENSER WITH AUTOMATIC CLEANING DEVICE
AUTOMATE DE PRÉPARATION DE BOISSONS COMPRENANT UN DISPOSITIF DE NETTOYAGE AUTOMATIQUE

(30) Priorität: 18.01.2016 DE 102016100724
(43) Veröffentlichungstag der Anmeldung: 19.07.2017
(73) Patentinhaber: Miele & Cie. KG, 33332 Gütersloh (DE)
(72) Erfinder: Tembaak, Jutta, 49492 Westerkappeln (DE); Last, Mario, 33739 Bielefeld (DE); Klapper, Diana, 33729 Bielefeld (DE)

(56) Entgegenhaltungen:
- EP-A1- 2 020 197
- DE-A1-102011 081 010
- US-A1- 2015 090 300

## Beschreibung

Die Erfindung betrifft einen Getränkeautomaten zur Zubereitung von Aufgussgetränken, mit einem Strömungsleitungssystem mit einer Ventilanordnung und einer Reinigungsvorrichtung zur Durchführung eines Reinigungs- und/oder Pflegevorgangs, umfassend eine Vorratskartusche zur Bevorratung von Reinigungsmittel, und eine elektrisch angetriebene Pumpe zur Zuführung des Reinigungsmittel oder einer Reinigungslösung von der Reinigungsvorrichtung in das Strömungsleitungssystem, ferner umfassend eine Steuereinrichtung zur Aktivierung und Deaktivierung der Ventilanordnung und der Pumpe zur Durchführung der Getränkezubereitung und des Reinigungs- oder Pflegevorgangs.

Ein Getränkeautomat mit einer Reinigungsvorrichtung ist beispielsweise aus der DE 10 2011 081 010 A1 bekannt. Hierbei ist in der Kartusche, die von der Geräteaußenseite her zugänglich ist, eine Pumpe integriert, die von einem geräteseitigen Antrieb angesteuert wird. Hierbei handelt es sich um eine Dosierpumpe, mit der eine vorbestimmte Menge an Reinigerkonzentrat aus der Kartusche in das Strömungsleitungssystem eingelassen wird. Nachteilig hierbei werden in regelmäßigen oder unregelmäßigen zeitlichen Abständen automatisch ablaufende Reinigungsvorgänge für das Strömungsleitungssystem durchgeführt. Insgesamt wird zwar eine Reinigung, also das Ablösen von groben Anhaftungen oder Schmutz, der Leitungen und Funktionskomponenten erreicht, trotzdem ist es möglich, dass Biofilm zumindest partiell im Leitungssystem verbleiben kann. Es sind deshalb manuell durchzuführende gründliche Wartungsarbeiten notwendig, um eine Verkeimung zuverlässig zu verhindern.

Die EP 2 020 197 A1 zeigt und beschreibt einen Getränkebereiter, der eine Reinigungsvorrichtung zum Reinigen des Strömungsleitungssystems umfasst. Der Getränkeautomat ist dabei fluidtechnisch mit einem Behälter verbunden, in dem sich die Reinigerlösung befindet. Diese wird dann mittels einer gezielten Ansteuerung der Ventile und Pumpen in das Strömungsleitungssystem eingelassen bzw. durchgepumpt.

Die US 2015/0900300 A1 offenbart einen Behälter, der mit einem Reinigungsmittel gefüllt und zur Reinigung des Strömungsleitungssystems für einen Getränkebereiter vorgesehen ist. Dabei ist das Reinigungsmittel als Pulver oder als Tablette in dem Behälter bevorratetet, wobei beim Reinigungsvorgang der Behälter in eine Aufnahme eingesetzt werden muss, in der eine Flutung mit Wasser stattfindet. Dabei wird eine Reinigerlösung erzeugt, die in die Leitungen und Komponenten des Strömungsleitungssystems gepumpt wird. Der Trockensubstanz ist dabei ein Gemisch aus verschiedenen Grundstoffen, unter anderem ist auch ein Konservierungsmittel enthalten.

Der Erfindung liegt somit die Aufgabe zu Grunde, eine verbesserte, zuverlässige, einfach zu handhabende automatische Reinigung oder automatische Wartung für einen Getränkebereiter bereitzustellen.

Erfindungsgemäß wird unter anderem diese Aufgabe durch einen Getränkebereiter mit den Merkmalen des unabhängigen Anspruchs 1 und durch eine Reinigerkartusche gemäß Anspruch 8 gelöst. Vorteilhafte Ausgestaltungen und Weiterbildungen der Erfindung ergeben sich aus den jeweils abhängigen Ansprüchen.

Ein mit der Erfindung erreichbarer Vorteil besteht darin, dass auf einfache Weise zusätzlich zu dem automatischen Reinigungsablauf sichergestellt wird, dass keine Verkeimung des Strömungsleitungssystems stattfindet. Der Benutzer muss zum Vermeiden oder Verhindern des Verkeimungsproblems keine gesonderten Vorkehrungen treffen oder Aktivitäten durchführen. Insgesamt entsteht ein sauberes, hygienisches Gerät oder System, das auch ein gewisses Fehlverhalten des Benutzers toleriert. Das Fehlverhalten, also das Ignorieren von manuell durchzuführenden Reinigungsmaßnahmen, führt nicht zu Fehlfunktionen oder ungenießbaren Getränken.

Hierzu umfasst die Reinigungsvorrichtung bzw. der Vorratsbehälter ferner ein Konservierungsmittel, wobei die Reinigungsvorrichtung dazu ausgebildet ist, das Konservierungsmittel in flüssiger Form in das Strömungsleitungssystem einzuleiten. Der Vorgang des Auflösens und Einleitens wird durch die Steuereinrichtung gesteuert und insgesamt im Gerät automatisch oder selbständig gestartet und durchgeführt.

In einer bevorzugten Ausführung ist das Konservierungsmittel in dem Vorratsbehälter, der auch das Reinigerkonzentrat bevorratet, angeordnet. Dadurch ist ein insgesamt kompakter Aufbau der Reinigungsvorrichtung möglich.

In einer vorteilhaften Weiterbildung sind das Konservierungsmittel und der Reiniger schichtweise in fester oder pastöser Form im Vorratsbehälter eingebracht. Derartige Substanzen in nicht aufgelöster Form sind in hoher Konzentration bereitzustellen und ferner länger haltbar und lagerbar, als in Lösung bereitgestellte Reiniger oder Konservierungsmittel. Die Bevorratung und Lagerhaltung von noch nicht angebrochenen Vorratsbehältern, auch als Kartusche bezeichnet, kann dadurch zeitlich lang bereitgestellt werden.

In einer insgesamt zweckmäßigen Ausführung ist die Menge an bevorratetem Konservierungsmittel in der Kartusche für einen oder mehrere Pflegevorgänge vorgesehen.

Bevorzugt ist hierbei die Menge an Reinigungsmittel für 5 bis 30 Pflegevorgänge bemessen und die Menge an Konservierungsmittel für einen bis 5 Pflegevorgänge. Die Reinigung oder die Entkeimung mit Konservierungsmittel wird in der Regel oder bevorzugt einmal täglich durchgeführt, sodass der Kartuschenvorrat für mehrere Tage, vorzugsweise mehrere Wochen, vorzugsweise zwei bis zwölf Monate, ausreicht.

In einer weiteren, insgesamt vorteilhaften Ausführung sind das Konservierungsmittel in einer ersten Schicht und der Reiniger in einer zweiten Schicht in dem Vorratsbehälter eingebracht, wodurch ein sequentielles Auflösen der Substanzen bereitgestellt wird. Die Kartusche mit dem festen Reiniger (Blockreiniger) wird durch eine obere Schicht mit Reiniger inkl. einem Konservierungsmittel (z. B. Sorbinsäure) ergänzt, so dass bei einer neuen Kartusche das gesamte Strömungsleitungssystem bzw. die keimanfälligen Bereiche des System saniert wird. Die Zuführung des Konservierungsmittels wird hierbei so eingestellt, dass sich eine Konzentration im Bereich von 80 bis 160 mmol einstellt oder ergibt.

In einer zweckmäßigen Weiterbildung umfasst die Reinigungsvorrichtung einen Mischbehälter, in den das durch Ansprühen aufgelöste Pflegemittel eintritt, wobei das Strömungsleitungssystem ferner eine mit der Steuereinrichtung in Verbindung stehende Ventilanordnung umfasst, die dazu ausgebildet ist, die als Reinigerlösung oder Konservierungslösung aufgelöste Pflegemittel in das Strömungsleitungssystem einzuleiten. Der Blockreiniger erhält eine obere Schicht mit Konservierungsmittel, die sich mit dem Reiniger verbindet. Da das Konservierungsmittel in dieser Schicht mit dem alkalischen Mittel gemischt ist, verbindet sich diese Schicht fest mit dem alkalischen Mittel, so dass die Kartusche ganz normal verwendet werden kann, wie ohne obere Schicht. Gleichzeitig wird in der Software der Steuereinrichtung hinterlegt, dass nach einem Kartuschentausch die Ansprühzeit so verlängert, beispielsweise verdoppelt wird, dass sich für die nächsten ein bis 5 Reinigungsvorgänge eine erhöhte Konzentration im Mischbehälter einstellt.

Die Erfindung betrifft auch eine Vorratskartusche, geeignet zum Einsatz in einem Getränkeautomaten mit einer Reinigungsvorrichtung wie vorstehend beschrieben, umfassend eine Bezugsöffnung zum Ausspülen oder herauslaufen lassen des Reinigungsmittels, wobei die Kartusche als erste Pflegesubstanz ein Reinigungsmittel und als zweite Pflegesubstanz ein Konservierungsmittel enthält.

In einer vorteilhaften Weiterbildung der Vorratskartusche, auch als Vorratsbehälter bezeichnet, sind das Konservierungsmittel und der Reiniger schichtweise in fester oder pastöser Form im Vorratsbehälter eingebracht. Die genannten Substanzen in fester Form lassen sich einfach verarbeiten und können recht lange, beispielsweise mehrere Monate bis einige Jahre gelagert werden, ohne dass sich die Wirksamkeit negativ verändert. Ferner ist sichergestellt, dass während der Lagerung oder des Transports oder der Handhabung beim Einsetzen in das Gerät keine Vermischung der unterschiedlich wirkenden Substanzen auftritt.

In einer zweckmäßigen Weiterbildung sind das Konservierungsmittel in einer ersten Schicht und der Reiniger in einer zweiten Schicht in dem Vorratsbehälter eingebracht sind, wodurch ein sequentielles Auflösen oder Herausspülen der Substanzen aus der Kartusche bereitgestellt wird. Insgesamt ist bei einer Anordnung, bei der die Schicht mit dem Konservierungsmittel an der Auslassseite in der Kartusche eingebracht ist sichergestellt, dass das vorbestimmte, sequentielle Auflösen durch die Einbringung von Wasser in die Kartusche stattfindet. In dem genannten Beispiel wird bei der nächstfolgenden Pflegeaktion zunächst das Konservierungsmittel in das Strömungsleitungssystem eingelassen, sodass nun eine Entkeimung oder Ablösen von Biofilmen stattfindet. Bei den später nachfolgenden Pflegevorgängen wird dann Reinigerlösung in das Strömungsleitungssystem eingelassen, da die Schicht mit dem Konservierungsmittel aufgebraucht wurde.

In einer insgesamt zweckmäßigen Ausführung der Vorratskartusche ist die Menge an Reinigungsmittel für 5 bis 90 Pflegevorgänge bemessen und die Menge an Konservierungsmittel für einen bis 5 Pflegevorgänge. Somit wird einerseits eine kompakte Einheit geschaffen, die sich einfach in ein Gerät unterbringen lässt und andererseits werden ausreichend lange Wechselintervalle eingehalten, wie sie für einen komfortablen Betrieb erwartet werden.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer perspektivischen Frontansicht
- Fig. 2:: schematisch das Strömungsleitungssystem;
- Fig. 3, 4:: die Reinigungsvorrichtung in verschiedenen Zustanden und
- Fig. 5:: ein Diagramm für eine mehrtägige Betriebsdauer.

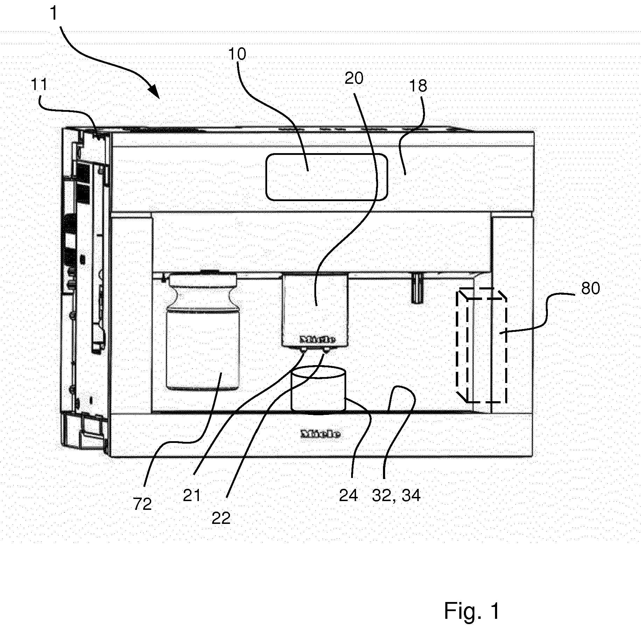

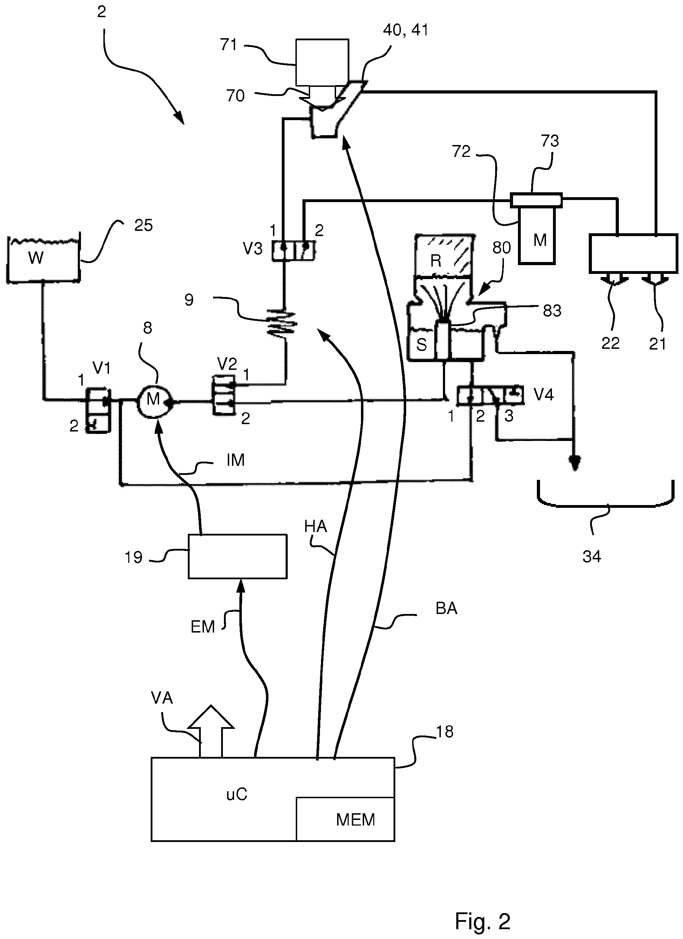

Die Fig.1 zeigt am Beispiel eines als Einbaugerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 25 sowie die Möglichkeit, der Unterbringung des Strömungsleitungssystems 2 Ferner ist am Gerät 1 ein Vorratsbehälter 72 für Milch angeschlossen bzw. mit dem Strömungsleitungssystem 2 fluidtechnisch gekoppelt. Im Frontbereich des Heißgetränkebereiter 1 verfügt dieser über einen höhenbeweglichen Auslass 20, in dem mehrere Entnahmeeinrichtungen, hier Auslassdüsen 21, 22, untergebracht sind. Bei der Entnahmeeinrichtung 23 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche oder Abtropfblech 32 abgestellten Trinkgefäßes 24 angepasst werden kann, ohne dass bei der Abgabe des Getränkes ein Verspritzen erfolgt. Das Abtropfblech 32 ist vorzugsweise mit Öffnungen und/oder Schlitzen versehen, um Flüssigkeitsreste in einer unterhalb des Abtropfbleches 32 vorhandenen Auffangschale 34 abzuführen. Ferner umfasst der Heißgetränkebereiter 1 einen Tresterbehälter oder Abfallbehälter, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpe 8, Ventile V1, V2, V3, V4 (Fig. 2), Heizeinrichtung 9 und Mahlwerk 70, soweit vorhanden, zu steuern, wie es für die Zubereitung des jeweils ausgewählten Getränkes notwendig ist. Die Steuereinrichtung 18 ist bevorzugt als Mikrocontroller uC mit einem zugeordneten Speicher MEM ausgeführt ist (Fig. 2), Der Heißgetränkebereiter 1 umfasst ferner eine Bedienvorrichtung 10, die in dem gezeigten Beispiel einen Berührbildschirm zur Eingabe von Bedienhandlungen umfasst. Die Bedienvorrichtung 10 wird von einem Mikrocontroller uC gesteuert, wobei in dem gezeigten Beispiel die Gerätesteuerung 18 bzw. der Mikrocontroller uC der Gerätesteuerung 18 auch für die Steuerung und Funktion der Bedienvorrichtung 10 ausgebildet und/oder programmiert ist. Die Vorratsbehälter 71, 25, 72 sind vorzugsweise jeweils mit einem Erfassungsmittel zur Erfassung der bevorrateten Menge der Zutat oder Zutaten versehen, die datentechnisch oder signaltechnisch mit der Steuereinrichtung 18 in Verbindung stehen.

Der Heißgetränkebereiter 1 umfasst ferner eine Reinigungsvorrichtung 80, in der Reinigungsmittel R bevorratet wird, welches gesteuert durch die Steuereinrichtung 18 in Zusammenwirken mit der Ventilanordnung in das Strömungsleitungssystem 2 zudosiert oder eingelassen wird. Insbesondere wird zyklisch oder aufgrund einer Benutzereingabe der Reiniger bzw. die Reinigerlösung S in die milchführenden Leitungen, die sich innerhalb des Gerätes 1 befinden, eingelassen.

Fig. 2 zeigt das Strömungsleitungssystem 2 mit den relevanten Funktionseinheiten und Aktoren zur Zubereitung von Heißgetränken. Im Zubereitungsbetrieb des Gerätes 1 wird Wasser W aus dem Vorratsbehälter 25 mittels der Pumpe 8 durch den Durchlauferhitzer 9 und mit Druck der Brühkammer 41 der Brüheinheit 40 zugeführt. In der Brühkammer befindet sich während der Aufbrühphase Kaffeemehl, durch das das erhitzte Wasser W mit Druck hindurchgedrückt wird. Dabei werden die löslichen Substanzen aus dem Kaffeemehl herausgelöst und als Getränk zur Entnahmeeinrichtung bzw. Düse 21 geführt und von dort aus in das Trinkgefäß 24 (Fig. 1) ausgegeben. Die Ventile sind dabei wie folgt geschaltet: V1 in Position 1, V2 in Position 1, V3 in Position 1 und V4 in Position 3 (gesperrt). Zum Bezug von Heißwasser oder zum Aktivieren des Milchaufschäumers 73, wird das Ventil V3 in die Position 2 geschaltet, um Heißwasser oder Dampf dem Milchschäumer 73, beispielsweise ein Venturirohr, das beim Durchströmen von Heisswasser oder Dampf Milch M aus dem Milchbehälter 72 ansaugt, zuzuführen, sodass dadurch die Milch oder, Milchschaum oder Milch-Wasser-gemisch zur Ausgabedüse 22 geführt wird.

Die Pumpe 8 bzw. der Pumpenmotor M wird dabei mittels der Motorsteuerung 19 bestromt, wie es mit der Verbindungsleitung IM skizziert ist. Die Motorsteuerung 19 erhält die Eingangsinformationen EM zur Ansteuerung bzw. Bestromung des Motors M von der Gerätesteuerung 18.

Die Ansteuerung der Ventile V1, V2, V3, V4 erfolgt ebenfalls über die Informationsausgabe VA. Die Steuereinrichtung 18 steuert auch die Aktivierung des Heizkörpers 9 des Wassererhitzers, wie es mit der Signalleitung HA schematisch gezeigt ist. Die Steuereinrichtung 18 steuert auch die Aktivierung der Brüheinheit 40 bzw. die Verfahrbewegung der Brühkammer 41 an, wie es mit der Signalleitung BA schematisch gezeigt ist.

In Fig. 2 ist ferner gezeigt, dass das Strömungsleitungssystem 2 eine Reinigungsvorrichtung 80 umfasst bzw. diese im Strömungsleitungssystem 2 eingebunden ist. Gemäß der skizzierten Ausführung umfasst die Reinigungsvorrichtung 80 einen Vorratsbehälter 81 zur Bevorratung von Reinigungsmittel R in fester, gepresster Pulver- oder pastöser Form. Unterhalb des Vorratsbehälters 81 ist die Mischkammer 82 angeordnet, in die das abgelöste Reinigungsmittel R mit Wasser W vermischt und entsprechend zur Reinigerlösung S aufgelöst wird. Die Reinigerlösung S wird mittels einer Pumpe, in dem gezeigten Beispiel mit der für die Getränkezubereitung vorgesehenen Pumpe 8 in ausgesuchte Bereiche des Strömungsleitungssystems 2 gepumpt bzw. geführt. Die Einleitung erfolgt dabei unter Zuhilfenahme der entsprechenden Ansteuerung der Ventile V1, V2, V3, V4. Der Motor M der Pumpe 8 wird dabei in einer vorteilhaften Ausführung mittels einer Motorsteuerung 19 bestromt, sodass die Pumpe 8 bzw. der Motor M in der Reinigungsphase mit unterschiedlichen Pumpenleistungen oder Durchflussgeschwindigkeiten betrieben werden kann.

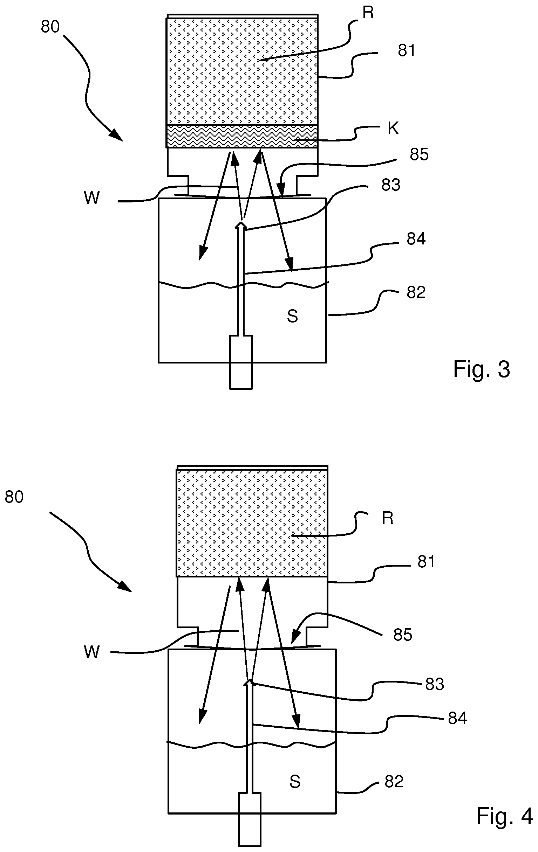

Fig. 3 zeigt die Reinigungsvorrichtung 80 in der Situation unmittelbar nach dem Einsetzen einer neuen Kartusche 81. Das Reinigungsmittel R ist noch in vollständiger Menge in der Kartusche 81 als innere Schicht vorhanden. Das Konservierungsmittel K befindet sich ebenfalls in der vollständigen Menge als äußere Schicht in der Kartusche 81. Äußere Schicht bedeutet, die zur Austrittsöffnung 85 der Kartusche 81 zugewandte Schicht. Die Kartusche 81 ist dabei mit ihrer Austrittsöffnung 85 auf die Mischkammer 82 gestülpt, sodass sich in betriebsgemäßer Lage die Schicht des Konservierungsmittels K oberhalb der Austrittsöffnung 85 befindet. Mittels eines durch die Mischkammer 82 ragendes Düsenrohr 84 wird Wasser W zur Düse 83 gefördert, das dann von der Düse 83 ausgehend durch die Austrittsöffnung 85 in das Innere der Kartusche 81 gespritzt wird. In der skizzierten Situation erreicht der Wasserstrahl W die Oberfläche des Konservierungsmittels K, wovon Teile abgelöst oder aufgelöst werden und in die Mischkammer 82 gelangen, wo das Konservierungsmittel dann als Lösung S zur Zuführung in das Strömungsleitungssystem 2 (Fig. 2) bereitsteht.

Fig. 4 zeigt die Reinigungsvorrichtung 80 in der Situation einige Reinigungsvorgänge später nach dem Einsetzen einer neuen Kartusche 81. Das Reinigungsmittel R ist noch in vollständiger Menge in der Kartusche 81 als innere Schicht vorhanden. Das Konservierungsmittel K ist vollständig aufgebraucht, sodass die Oberfläche des Reinigers R der Austrittsöffnung 85 der Kartusche 81 zugewandte ist. Die Kartusche 81 ist dabei mit ihrer Austrittsöffnung 85 auf die Mischkammer 82 gestülpt, sodass sich nun in betriebsgemäßer Lage die Schicht des Reinigers R oberhalb der Austrittsöffnung 85 befindet. Mittels eines durch die Mischkammer 82 ragendes Düsenrohr 84 wird Wasser W zur Düse 83 gefördert, das dann von der Düse 83 ausgehend durch die Austrittsöffnung 85 in das Innere der Kartusche 81 gespritzt wird. In der skizzierten Situation erreicht der Wasserstrahl W die Oberfläche des Reinigers R wovon Teile abgelöst oder aufgelöst werden und in die Mischkammer 82 gelangen, wo das Reinigungsmittel dann als Lösung S zur Zuführung in das Strömungsleitungssystem 2 (Fig. 2) bereitsteht.

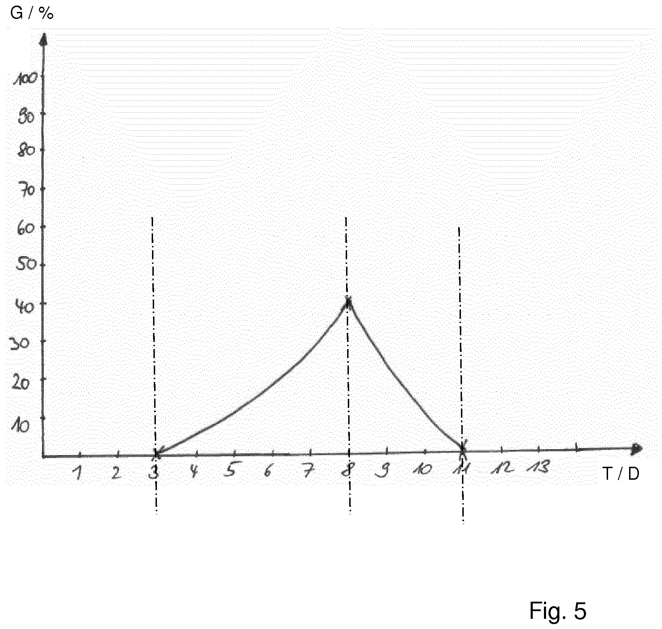

Fig. 5 zeigt den Ablauf für einen Zeitraum über mehrere Tage. Auf der Y-Achse ist das Wachstum G in % für Biofilm angegeben. Die X-Achse skizziert die Zeit t in Tagen D. Die Kartusche 81 befindet sich bereits in einem fast leeren Zustand. Für 3 Tage reicht der alkalische Reiniger, der sich noch als Lösung S in der Mischkammer 81 befindet. noch aus. Es bildet sich im System 2 kein Biofilm.

Nach den drei Tagen (D=3) wechselt der Benutzer die Kartusche 81 nicht aus, sondern betreibt das Gerät 1 weiterhin. Das bedeutet, dass der Reinigungsprozess zwar abläuft, aber nur noch mit Wasser, dadurch entsteht ein Biofilm, der sich Tag für Tag weiter aufbaut.

Am 10. Tag setzt der Benutzer eine neue Kartusche 81 ein, die eine dünne obere Schicht hat, in der zusätzlich ein Konservierungsmittel K beigegeben ist. Der Biofilm wird nicht mit einem Schlag abgebaut, sondern es benötigt ca. 3 Tage, in denen der Biofilm nach und nach entfernt wird. Diese Extraschicht K hält ca. diese 3 Tage. Danach wird das Gerät 1 bzw. das Strömungsleitungssystem 2 wieder mit dem reinen alkalischen Reiniger R bzw. der Reinigerlösung S gereinigt und der Biofilm baut sich nicht auf.

Insgesamt wird mit der beschriebenen verbesserten Reinigungsvorrichtung erreicht, dass sich der Benutzer um Hygienemaßnahmen im Gerät 1 nicht kümmern muss. Im Leitungssystem entstandener Biofilm / Verkeimung wird beseitigt. Außerdem wird sichergestellt, dass das Wasser im Mischbehälter 82 und der Mischbehälter 82 selber einer Grundreinigung unterzogen wird. Das macht das System 2 noch hygienischer und sicherer, wodurch Reklamationen an den Hersteller vermieden werden Die Kartusche 82 mit dem festen Reiniger (Blockreiniger) R wird durch eine obere Schicht mit Reiniger inkl. einem Konservierungsmittel K, beispielsweise Sorbinsäure ergänzt, so dass bei einer neuen, noch nicht angebrauchten Kartusche 81 das gesamte System 2, 82 saniert wird. In einer bevorzugten Ausführung wird dabei die Ansprühzeit gegenüber dem normalen Reinigungsablauf deutlich erhöht, vorteilhafterweise verdoppelt oder nahezu verdoppelt, sodass eine erhöhte Konzentration, z. B. 120 mmol, an Konservierungsmittel bzw. Reiniger R für diese Phase der Grundreinigung bereitgestellt wird. Dies geschieht nur einmalig oder drei Tage nacheinander, für die restlichen verbleibenden Betriebstage, beispielsweise 80 Tage, wird mit normaler Konzentration, beispielsweise 60 mmol/l Reiniger, gearbeitet. Eine tägliche Reinigung mit der hohen Konzentrationszusammensetzung ist nicht ratsam, da dabei die Materialien viel zu sehr belastet würden und vor allem die Kartusche 81 statt 3 Monaten nur noch 1 Monat halten würde.

## Patentansprüche

1. Getränkeautomat (1) zur Zubereitung von Aufgussgetränken, mit einem Strömungsleitungssystem (2) mit einer Ventilanordnung (V1, V2, V3, V4) und einer Reinigungsvorrichtung (80) zur Durchführung eines Reinigungs- und/oder Pflegevorgangs, umfassend eine Vorratskartusche (81) zur Bevorratung von Reinigungsmittel (R), und eine elektrisch angetriebene Pumpe (8, M) zur Zuführung des Reinigungsmittel (R) oder einer Reinigungslösung (S) von der Reinigungsvorrichtung (80) in das Strömungsleitungssystem (2), ferner umfassend eine Steuereinrichtung (18) zur Aktivierung und Deaktivierung der Ventilanordnung (V1, V2, V3, V4) und der Pumpe (8, M) zur Durchführung der Getränkezubereitung und des Reinigungs- oder Pflegevorgangs,
**dadurch gekennzeichnet,**
**dass** die Reinigungsvorrichtung (80) ferner ein Konservierungsmittel (K) umfasst, wobei die Reinigungsvorrichtung (80) dazu ausgebildet ist, das Konservierungsmittel (K) in flüssiger Form (S) in das Strömungsleitungssystem (2) einzuleiten, wobei das Konservierungsmittel (K) in dem Vorratsbehälter (81) angeordnet ist und das Konservierungsmittel (K) und der Reiniger (R) schichtweise in fester oder pastöser Form im Vorratsbehälter (81) eingebracht sind.

2. Getränkeautomat nach Anspruch 1,
**dadurch gekennzeichnet,**
**dass** die Menge an Konservierungsmittel (K) für einen oder mehrere Pflegevorgänge vorgesehen ist.

3. Getränkeautomat nach Anspruch 2,
**dadurch gekennzeichnet,**
**dass** die Menge an Reinigungsmittel (R) für 5 bis 90 Pflegevorgänge bemessen ist und die Menge an Konservierungsmittel (K) für einen bis 5 Pflegevorgänge.

4. Getränkeautomat nach Anspruch 1, 2 oder 3,
**dadurch gekennzeichnet,**
**dass** das Konservierungsmittel (K) in einer ersten Schicht und der Reiniger (R) in einer zweiten Schicht in dem Vorratsbehälter eingebracht sind, wodurch ein sequentielles Auflösen der Substanzen (K, R) bereitgestellt wird.

5. Getränkeautomat nach einem der Ansprüche 1 bis 4,
**dadurch gekennzeichnet,**
**dass** die Reinigungsvorrichtung (80) eine Sprühvorrichtung (83, 84)) zum Ansprühen und partiellem Auflösen von in dem Vorratsbehälter (81) vorhandenen, in fester oder pastöser Form angeordnetem Pflegemittel (K) bzw. Reinigungsmittel (R) aufweist.

6. Getränkeautomat nach Anspruch 5,
**dadurch gekennzeichnet,**
**dass** die Reinigungsvorrichtung (80) einen Mischbehälter (82) umfasst, in den das durch Ansprühen aufgelöste Pflegemittel (R) eintritt, wobei das Strömungsleitungssystem (2) ferner eine mit der Steuereinrichtung (18, uC) in Verbindung stehende Ventilanordnung (V1, V2, V3, V4) umfasst, die dazu ausgebildet ist, die als Reinigerlösung (S) oder Konservierungslösung (S) aufgelöste Pflegemittel in das Strömungsleitungssystem (2) einzuleiten.

7. Getränkeautomat nach einem der Ansprüche 4 bis 6,
**dadurch gekennzeichnet,**
**dass** in der Software der Steuereinrichtung (18, uC) hinterlegt ist, dass nach einem Kartuschentausch die Ansprühzeit so verlängert, beispielsweise verdoppelt wird, dass sich für die nächsten ein bis 5 Reinigungsvorgänge eine erhöhte Konzentration im Mischbehälter (82) einstellt.

8. Vorratskartusche (81), geeignet zum Einsatz in einem Getränkeautomaten (1) mit einer Reinigungsvorrichtung (80) gemäß einem der Ansprüche 1 bis 7, umfassend eine Bezugsöffnung (85) zum Ausspülen oder herauslaufen lassen des Reinigungsmittels (R), wobei die Kartusche (81) als erste Pflegesubstanz ein Reinigungsmittel (R) und als zweite Pflegesubstanz ein Konservierungsmittel (K) enthält,
**dadurch gekennzeichnet,**
**dass** das Konservierungsmittel (K) in dem Vorratsbehälter (81) angeordnet ist und das Konservierungsmittel (K) und der Reiniger (R) schichtweise in fester oder pastöser Form im Vorratsbehälter (81) eingebracht sind.

9. Vorratskartusche (81) nach Anspruch 8,
**dadurch gekennzeichnet,**
**dass** das Konservierungsmittel (K) und der Reiniger (R) schichtweise in fester oder pastöser Form im Vorratsbehälter (81) eingebracht sind.

10. Vorratskartusche (81) nach Anspruch 8 oder 9,
**dadurch gekennzeichnet,**
**dass** das Konservierungsmittel (K) in einer ersten Schicht und der Reiniger (R) in einer zweiten Schicht in dem Vorratsbehälter eingebracht sind, wodurch ein sequentielles Auflösen oder Herausspülen der Substanzen (K, R) aus der Kartusche (81) bereitgestellt wird,

11. Vorratskartusche (81) nach Anspruch 10,
**dadurch gekennzeichnet,**
**dass** die Menge an Reinigungsmittel (R) für 5 bis 90 Pflegevorgänge bemessen ist und die Menge an Konservierungsmittel (K) für einen bis 5 Pflegevorgänge.

## Claims

1. Drinks machine (1) for preparing infusion drinks, comprising a flow line system (2) that has a valve arrangement (V1, V2, V3, V4) and a cleaning apparatus (80) for carrying out a cleaning and/or care process, comprising a storage cartridge (81) for storing cleaning agent (R), and an electrically driven pump (8, M) for supplying the cleaning agent (R) or a cleaning solution (S) from the cleaning apparatus (80) into the flow line system (2), further comprising a control device (18) for activating and deactivating the valve arrangement (V1, V2, V3, V4) and the pump (8, M) for carrying out the drink preparation and the cleaning or care process, **characterised in that** the cleaning apparatus (80) further comprises a preservative (K), the cleaning apparatus (80) being designed to introduce the preservative (K) in liquid form (S) into the flow line system (2), the preservative (K) being arranged in the storage container (81) and the preservative (K) and the cleaner (R) being placed in layers in solid or pasty form in the storage container (81).

2. Drinks machine according to claim 1, **characterised in that** the amount of preservative (K) is provided for one or more care operations.

3. Drinks machine according to claim 2, **characterised in that** the amount of cleaning agent (R) is measured for 5 to 90 care operations and the amount of preservative (K) for one to 5 care operations.

4. Drinks machine according to claim 1, 2, or 3, **characterised in that** the preservative (K) is placed in a first layer and the cleaner (R) is placed in a second layer in the storage container, thereby providing sequential dissolution of the substances (K, R).

5. Drinks machine according to any of claims 1 to 4, **characterised in that** the cleaning apparatus (80) has a spraying apparatus (83, 84)) for spraying and partially dissolving care product (K) or cleaning agent (R) present in solid or pasty form in the storage container (81).

6. Drinks machine according to claim 5, **characterised in that** the cleaning apparatus (80) comprises a mixing container (82) into which the care product (R) dissolved by spraying enters, the flow line system (2) further comprising a valve arrangement (V1, V2, V3, V4) which is in communication with the control device (18, uC) and is designed to introduce the care product (R), dissolved as the cleaning solution (S) or preservative solution (S), into the flow line system (2).

7. Drinks machine according to any of claims 4 to 6, **characterised in that** it is stored in the software of the control device (18, uC) that, after replacing the cartridge, the spraying time is extended, for example doubled, so that an increased concentration is set in the mixing container (82) for the next one to 5 cleaning operations.

8. A storage cartridge (81) suitable for use in a drinks machine (1) having a cleaning apparatus (80) according to one of claims 1 to 7, comprising a reference opening (85) for flushing out the cleaning agent (R) or for letting said agent run out, the cartridge (81) containing a cleaning agent (R) as a first care substance and a preservative (K) as a second care substance, **characterised in that** the preservative (K) is arranged in the storage container (81) and the preservative (K) and the cleaner (R) are placed in layers in solid or pasty form in the storage container (81).

9. Storage cartridge (81) according to claim 8, **characterised in that** the preservative (K) and the cleaner (R) are placed in layers in solid or pasty form in the storage container (81).

10. Storage cartridge (81) according to either claim 8 or claim 9, **characterised in that** the preservative (K) is placed in a first layer and the cleaner (R) is placed in a second layer in the storage container, thereby providing sequential dissolution or flushing out of the substances (K, R) from the cartridge (81).

11. Storage cartridge (81) according to claim 10, **characterised in that** the amount of cleaning agent (R) is measured for 5 to 90 care operations and the amount of preservative (K) for one to 5 care operations.

## Revendications

1. Distributeur de boissons (1) pour la préparation de boissons infusées, doté d'un système de conduite d'écoulement (2) comportant un agencement de vanne (V1, V2, V3, V4) et un dispositif de nettoyage (80) permettant de réaliser une opération de nettoyage et/ou d'entretien, comprenant une cartouche de stockage (81) destiné au stockage des détergents (R), et une pompe (8, M) à entraînement électrique destiné à l'acheminement du détergent (R) ou d'une solution de nettoyage (S) du dispositif de nettoyage (80) dans le système de conduite d'écoulement (2), comprenant en outre un dispositif de commande (18) destiné à l'activation et à la désactivation de l'agencement de vanne (V1, V2, V3, V4) et de la pompe (8, M) pour réaliser la préparation de la boisson et l'opération de nettoyage ou d'entretien, **caractérisé en ce que** le dispositif de nettoyage (80) comprend en outre un conservateur (K), le dispositif de nettoyage (80) étant conçu pour introduire le conservateur (K) sous forme liquide (S) dans le système de conduite d'écoulement (2), le conservateur (K) étant disposé dans le réservoir (81) et le conservateur (K) et le détergent (R) étant introduits en couches sous forme solide ou pâteuse dans le réservoir (81).

2. Distributeur de boissons selon la revendication 1, **caractérisé en ce que** la quantité de conservateur (K) est prévue pour une ou plusieurs opérations d'entretien.

3. Distributeur de boissons selon la revendication 2, **caractérisé en ce que** la quantité de détergent (R) est calculée pour 5 à 90 opérations d'entretien et la quantité de conservateur (K) pour une à 5 opérations d'entretien.

4. Distributeur de boissons selon la revendication 1, 2 ou 3, **caractérisé en ce que** le conservateur (K) est incorporé dans une première couche et le détergent (R) est incorporé dans une seconde couche dans le récipient de stockage, assurant ainsi une dissolution séquentielle des substances (K, R).

5. Distributeur de boissons selon l'une des revendications 1 à 4, **caractérisé en ce que** le dispositif de nettoyage (80) comporte un dispositif de pulvérisation (83, 84) destiné à pulvériser et à dissoudre partiellement des produits d'entretien (K) ou des détergents (R) présents dans le réservoir (81) et disposés sous forme solide ou pâteuse.

6. Distributeur de boissons selon la revendication 5, **caractérisé en ce que** le dispositif de nettoyage (80) comprend un réservoir de mélange (82) dans lequel le produit d'entretien (R) dissous par pulvérisation entre, le système de conduite d'écoulement (2) comprenant en outre un agencement de vanne (V1, V2, V3, V4) qui communique avec le dispositif de commande (18, uC) et est conçu pour introduire le produit d'entretien dissous comme solution de nettoyage (S) ou solution de conservation (S) dans le système de conduite d'écoulement (2).

7. Distributeur de boissons selon l'une des revendications 4 à 6, **caractérisé en ce que** qu'il est consigné dans le logiciel du dispositif de commande (18, uC) qu'après un changement de cartouche, le temps de pulvérisation est prolongé, par exemple doublé, de sorte qu'une concentration accrue dans le réservoir de mélange (82) soit atteinte pour les 5 opérations de nettoyage suivantes.

8. Cartouche de stockage (81), appropriée pour une utilisation dans un distributeur de boissons (1) comportant un dispositif de nettoyage (80) selon l'une des revendications 1 à 7 comprenant une ouverture de référence (85) destinée au rinçage ou à l'évacuation du détergent (R), la cartouche (81) contenant un détergent (R) comme première substance d'entretien et un conservateur (K) comme seconde substance d'entretien, **caractérisée en ce que** le conservateur (K) est disposé dans le réservoir (81) et le conservateur (K) et le détergent (R) sont introduits en couches sous forme solide ou pâteuse dans le réservoir (81).

9. Cartouche de stockage (81) selon la revendication 8, **caractérisée en ce que** le conservateur (K) et le détergent (R) sont introduits en couches sous forme solide ou pâteuse dans le réservoir (81).

10. Cartouche de stockage (81) selon la revendication 8 ou 9, **caractérisée en ce que** le conservateur (K) est incorporé dans une première couche et le détergent (R) est incorporé dans une seconde couche dans le réservoir, assurant ainsi une dissolution séquentielle ou le rinçage des substances (K, R) de la cartouche (81).

11. Cartouche de stockage (81) selon la revendication 10, **caractérisée en ce que** la quantité de détergent (R) est calculée pour 5 à 90 opérations d'entretien et la quantité de conservateur (K) pour une à 5 opérations d'entretien.
